# EUROPÄISCHE PATENTANMELDUNG

(11) **EP 1 990 656 A1**
(43) Veröffentlichungstag der Anmeldung: **12.11.2008**
(21) Anmeldenummer: 07009180.6
(22) Anmeldetag: 07.05.2007
(51) Int. Cl.: G01S 17/02, G01S 17/08, G01S 7/481

(54) **Dämpungsglied mit PIN-Dioden für optischen Entfernungsmesser**

(71) Anmelder: SICK AG, 79183 Waldkirch (DE)
(72) Erfinder: Günther, Andreas, 22941 Bargteheide (DE)
(74) Vertreter: Manitz, Finsterwald & Partner GbR

(57) **Zusammenfassung**

Die Anmeldung betrifft einen optischen Entfernungsmesser mit einem Lichtsender zum Aussenden von Messlicht in einen Überwachungsraum, einem Lichtempfänger zum Empfang von durch ein Objekt im Überwachungsraum reflektiertem bzw. remittiertem Messlicht und einer Auswerteschaltung, um aus dem Ausgangssignal des Lichtempfängers die Laufzeit des Messlichtes und daraus die Entfernung des Objektes zu bestimmen. Zwischen dem Lichtempfänger und der Auswerteschaltung ist eine elektrisch mit diesen verbundene pin-Diodenschaltung vorgesehen, wobei die pin-Diodenschaltung das Strom-Ausgangssignal des Lichtempfängers dämpft.

## Beschreibung

Die vorliegende Erfindung betrifft einen optischen Entfernungsmesser mit einem Lichtsender zum Aussenden von Messlicht in einen Überwachungsraum, einem Lichtempfänger zum Empfang von durch ein Objekt im Überwachungsraum reflektiertem bzw. remittiertem Messlicht und zur Erzeugung eines elektrischen Ausgangssignals und einer Auswerteschaltung, die mit dem Lichtempfänger verbunden ist, um aus dessen Ausgangssignal die Laufzeit des Messlichtes zu bestimmen und daraus die Entfernung des Objektes abzuleiten. Die Erfindung betrifft weiterhin ein entsprechendes Entfernungsmessverfahren.

Solche optischen Entfernungsmesser bestimmen den Abstand eines Objektes aus der Laufzeit des Messlichtes unter Berücksichtigung der Lichtgeschwindigkeit und werden daher auch als Time-of-Flight-Detektoren (TOF-Detektoren) bezeichnet.

Das ausgesendete Messlicht kann aus einzelnen Lichtpulsen bestehen, deren Laufzeit ausgemessen wird (Pulse-Time-of Flight-Verfahren). Solche Verfahren sind zum Beispiel in DE 10 2004 031 024 B4, DE 43 40 756 A1 oder EP 0 793 115 B1 beschrieben. Andere Verfahren verwenden moduliertes, kontinuierliches Licht (Continuous-Wave-Time-of-Flight-Verfahren), wie es in EP 0 747 727 B1 oder EP 1 262 906 B1 beschrieben ist, wobei die Phasenverschiebung des Empfangslichtes gegenüber dem ausgesendeten Licht ausgewertet wird.

Für die Zwecke des vorliegenden Textes wird der Begriff "Licht" nicht nur für sichtbares Licht verwendet, sondern kann auch elektromagnetische Strahlung in anderen Frequenzbereichen bezeichnen (zum Beispiel infrarote oder ultraviolette Strahlung).

Zur Abstandsermittlung können eindimensionale Abstandstaster verwendet werden, bei denen das Messlicht in einer Richtung ausgesendet und detektiert wird. Ein drehbarer bzw. schwenkbarer Ablenkspiegel, wie er z.B. in EP 0 793 115 B1 beschrieben ist, kann eingesetzt werden, um einen zwei- oder dreidimensionalen Überwachungsbereich zu erzeugen.

Der Lichtempfänger muss in der Lage sein, schwache Empfangssignale ausreichend genau zu detektieren, um auch den Abstand zu Objekten mit geringer Reflektivität bzw. Remittivität korrekt zu bestimmen. Dies erfordert eine hohe Eingangsempfindlichkeit der Auswerteschaltung, die gewöhnlich unter Einsatz eines Vorverstärkers erreicht wird. Hingegen erzeugen Objekte mit hoher Reflektivität bzw. Remittivität am Lichtempfänger starke Empfangssignale mit sehr hoher Amplitude, die den Vorverstärker der Auswerteschaltung übersteuern können und damit dazu führen, dass die Auswerteschaltung mit einem verzerrten Signal arbeitet.

So kann das im elektrooptischen Wandler gewandelte elektrische Signal innerhalb des Arbeitsbereiches des Sensors einen Dynamikbereich von z.B. über 80dB erreichen, wohingegen die in der Regel an die geringste Signalstärke angepasste elektronische Signalaufbereitung im allgemeinen einen wesentlich geringeren Dynamikumfang hat. Eine bei höheren Signalstärken resultierende drastische Übersteuerung kann dann bei der nachfolgenden Signalauswertung zu erheblichen Fehlern führen.

Bekannte Sensoren begegnen diesem grundsätzlichen Problem auf unterschiedliche Weise:

Die in DE 43 40 756 A1 offenbarte Laserabstandsermittlungsvorrichtung ermittelt den Spitzenwert des empfangenen Lichtpulses und nimmt anhand der Amplitude Laufzeitkorrekturen vor. Der in der Regel im Vergleich mit der in der Praxis auftretenden Signaldynamik begrenzte lineare Verstärkungsbereich einer dem optoelektronischen Photoempfänger in der Regel nachgeschalteten Auswertestufe kann jedoch zu Laufzeitmessfehlern führen, so dass die Kompensation in Abhängigkeit von dem gemessenen Spitzenwert nur in einem relativ kleinen Aussteuerungsbereich verwendet werden kann.

DE 10 2004 031 024 B4 offenbart einen optischen Sensor, der den Scheitelpunkt eines empfangenen Lichtpulses durch zwei Laufzeitmessungen ermittelt. Dazu werden die Zeitpunkte gemessen, an denen ein Empfangslichtpuls einen Schwellwert über- und wieder unterschreitet. Daraus wird ein Mittelwert gebildet, der den Zeitpunkt des Scheitelpunkts annähert, welcher der Berechnung des Abstands zugrunde gelegt wird. Bei einer Übersteuerung der elektronischen Verarbeitungsstufe wird zusätzlich ein Korrekturwert verwendet, dessen Größe von der gemessenen Empfangslichtpulsbreite abhängt.

Eine in EP 0 793 115 B1 offenbarte Laserabstandsermittlungsvorrichtung bestimmt die während des Empfangs über den Fotodetektor fließende elektrische Ladung bzw. die Pulsbreite des empfangenen Lichtpulses vor der Signalauswertung und führt eine Laufzeitmessfehlerkompensation anhand dieser Werte durch.

Desweiteren kann eine nichtlineare Amplitudenbegrenzung (Clampingdioden) des Empfangssignals verwendet werden, um einer Übersteuerung der elektronischen Signalauswertung vorzubeugen, wodurch jedoch weitere zu kompensierende Fehler entstehen können.

Andere Lösungen verwenden z.B. elektromechanisch einstellbare optische Dämpfungselemente vor dem Lichtempfänger, die die optische Entfernungsmessung allerdings verlangsamen.

Schließlich ist die Anpassung der Sendeleistung des ausgesendeten Messlichts bekannt, um die Übersteuerung der Signalauswertung zu vermeiden. Aufgrund eingeschränkter Verstellmöglichkeiten des Lichtsenders bietet dieser Ansatz jedoch oftmals nicht den gewünschten Dynamikbereich.

Bei anderen Verfahren wird der Signalauswertungspfad mit veränderbaren Verstärkungen ausgelegt, um den Dynamikumfang der Auswerteschaltung zu erhöhen. Dabei muss wiederum darauf geachtet werden, dass die erste Stufe der Signalauswertung nicht übersteuert wird.

Die bekannten Lösungen erfordern zudem einen erheblichen Kalibrier- bzw. Teach-In-Aufwand.

Es ist die Aufgabe der Erfindung, einen optischen Entfernungsmesser bzw. ein Entfernungsmessverfahren anzugeben, die unter Verwendung eines Time-of-Flight-Verfahrens eine möglichst genaue Entfernungsmessung mit möglichst geringem Kalibrierungsaufwand ermöglichen.

Zur Lösung dieser Aufgabe ist ein optischer Entfernungsmesser mit den Merkmalen des Anspruchs 1 sowie ein Verfahren nach Anspruch 10 vorgesehen. Vorteilhafte Ausführungsformen und zweckmäßige Weiterbildungen der Erfindung sind in Unteransprüchen beschrieben.

Ein erfindungsgemäßer optischer Entfernungsmesser weist zwischen dem Lichtempfänger und der Auswerteschaltung eine pin-Diodenschaltung mit mindestens einer pin-Diode auf. Das aus dem Überwachungsraum zurückreflektierte oder -remittierte Messlicht wird von dem Lichtempfänger aufgenommen und in ein elektrisches Strom-Ausgangssignal umgeformt, das zu der pin-Diodenschaltung weitergeleitet wird. Die pin-Diodenschaltung dämpft dieses Ausgangssignal, bevor es an die Auswerteschaltung weitergeleitet wird. Das Strom-Ausgangssignal des Lichtempfängers besteht in der Regel aus einem oder mehreren Strompulsen.

pin-Dioden umfassen einen n-dotierten und einen p-dotierten Halbleiterbereich mit einem dazwischen liegenden eigenleitenden (engl.: intrinsic) Bereich. Ihr Hochfrequenzwiderstand ist durch die Größe eines aufgeprägten Gleichstromes einstellbar. pin-Dioden sind besonders geeignet, insbesondere auch mit hohen Pulsströmen bei einem typischen Signalspektrum im GHz-Bereich umzugehen, ohne einen sich an den Lichtempfänger anschließenden Signalpfad kapazitiv zu belasten.

Mit der pin-Dioden-Schaltung kann die Amplitude des elektrischen Strom-Ausgangssignals des Lichtempfängers nahezu ohne Verzögerung und ohne Verzerrung soweit gedämpft werden, dass die elektronische Signalauswertung der nachfolgenden Auswerteschaltung nicht übersteuert wird. Somit kann auf die voranstehend erwähnten aufwändigen Kompensationsverfahren weitgehend verzichtet werden und die Kalibrierung lässt sich stark vereinfachen.

Signalverzerrungen durch Übersteuerungen werden verhindert, so dass die Signalform trotz Dämpfung unverfälscht an die folgenden Signalauswertungseinheiten übergeben wird.

Eine bevorzugte Ausführungsform der Erfindung verwendet einen Analog/Digital-Wandler in der Auswerteschaltung, um das gedämpfte Empfangssignal und vorzugsweise auch ein von dem ausgesendeten Messlicht abgeleitetes Referenzsignal in einen Digitalwert hoher Auflösung zu überführen, wodurch eine sehr genaue Zeitbestimmung ermöglicht wird.

Bei einer bevorzugten Weiterbildung wird zum Beispiel als eine erste Stufe der Auswerteschaltung ein Transimpedanzverstärker eingesetzt. Damit wird das von dem Lichtempfänger über die pin-Dioden-Schaltung geleitete Stromsignal in ein Spannungssignal umgewandelt, das von nachfolgenden Komponenten der Auswerteschaltung verwendet wird.

Eine Ausführungsform der Erfindung sendet als Messlicht einen oder mehrere Lichtpulse aus. Die reflektierten bzw. remittierten Lichtpulse werden im Lichtempfänger in elektrische Signale umgeformt und in der Auswerteschaltung z.B. mit von den ursprünglich ausgesendeten Messlichtpulsen abgeleiteten Referenzpulsen verglichen, um aus der Verzögerung die Pulslaufzeit und daraus mit Hilfe der Lichtgeschwindigkeit den Objektabstand zu ermitteln.

Eine alternative Ausführungsform der Erfindung verwendet kontinuierliches, moduliertes Messlicht, dessen durch die Lichtlaufzeit im Überwachungsraum hervorgerufene Phasenverschiebung ausgewertet wird. Zum Beispiel kann dazu aus dem Lichtsender, der Messstrecke, dem Lichtempfänger, einem Filterbaustein mit Phasengang und ggf. weiteren Bausteinen ein Schwingkreis gebildet werden, dessen Resonanzfrequenz dem ausgesendeten modulierten Licht aufgeprägt wird. Die Resonanzfrequenz hängt von der Phasenverschiebung des Lichts entlang der Messstrecke ab, so dass daraus der Abstand des Objekts ermittelt werden kann.

Besonders bevorzugte Ausführungsformen verwenden eine pin-Dioden-Schaltung mit mindestens einer pin-Diode, die einerseits mit HF-Masse (Hochfrequenzmasse) und andererseits mit dem vom Lichtempfänger weitergeleiteten elektrischen Empfangssignal verbunden ist. Über eine zusätzliche Schaltung wird z.B. mit einer regelbaren Gleichstromquelle ein Gleichstrom durch die mindestens eine pin-Diode vorgegeben, der den Widerstandswert der pin-Diode im Hochfrequenzbereich bestimmt. Die Schaltung wirkt somit wie ein Lastwiderstand im Hochfrequenzbereich, der die Stromamplitude des elektrischen Empfangssignals einstellbar dämpft. Es können auch mehrere parallelgeschaltete pin-Dioden mit jeweiligen Widerständen verwendet werden, um den Dynamikbereich der Dämpfungsschaltung zu erweitern.

Die Erfindung betrifft außerdem ein Verfahren zur optischen Entfernungsmessung, bei dem Messlicht in einen Überwachungsbereich ausgesendet wird und das gegebenenfalls von einem Objekt reflektierte oder remittierte Messlicht mit Hilfe eines Lichtempfängers empfangen und in ein elektrisches Strom-Ausgangsignal umgewandelt wird. Vor der Auswertung mit Hilfe einer Auswerteschaltung zur Bestimmung des Abstandes des optischen Entfernungsmessers zu dem Objekt wird das elektrische Ausgangssignal des Lichtempfängers mit Hilfe einer pin-Diodenschaltung gedämpft.

Vorteile des erfindungsgemäßen Verfahrens, besondere Ausgestaltungen des erfindungsgemäßen Verfahrens und deren Vorteile ergeben sich aus den oben geschilderten Ausführungsformen des erfindungsgemäßen optischen Entfernungsmessers.

Insbesondere sieht eine Weiterbildung des erfindungsgemäßen Verfahrens vor, dass eine oder mehrere regelbare Gleichstromquellen eingesetzt werden, um die Diode bzw. die Dioden der pin-Diodenschaltung mit einem Gleichstrom zu beaufschlagen. Durch Einstellung des Gleichstromes auf einen gewünschten Wert kann der Widerstand der Diode bzw. der Dioden festgelegt werden, wodurch die Dämpfung des elektrischen Strom-Ausgangssignales des Lichtempfängers bestimmt wird. So lässt sich eine Übersteuerung der Auswerteschaltung verhindern.

Die benötigte Dämpfung der pin-Dioden-Schaltung, d.h. insbesondere der einzustellende Stromwert der einstellbaren Gleichstromquelle(n), kann durch Vorversuche ermittelt werden. Dies kann beispielsweise durch einen Einlernprozess bzw. mittels eines Testdurchlaufs erfolgen, anhand dessen die Auswerteschaltung die aktuelle Übersteuerung ermittelt und z.B. über eine integrierte Steuerschaltung die entsprechenden Werte geeignet einstellt, so dass die angeschlossene Auswerteschaltung nicht mehr übersteuert wird.

Alternativ erfolgt die Ansteuerung der pin-Diode bzw. der pin-Dioden iterativ während des Messvorganges.

Die Erfindung wird nachfolgend unter Bezugnahme auf die Zeichnungen erläutert. In diesen zeigen:
- Fig. 1: den schematischen Aufbau eines Lichtempfangspfades eines erfindungsgemäß ausgestalteten optischen Entfernungsmessers;
- Fig. 2: ein Prinzipschaltbild einer pin-Dioden-Schaltung einer ersten Ausführungsform;
- Fig. 3: ein Prinzipschaltbild einer pin-Dioden-Schaltung einer zweiten Ausführungsform; und
- Fig. 4: vom Analog/ Digital-Wandler abgetastete Signale eines Referenzpulses und eines zugehörigen Empfangspulses.

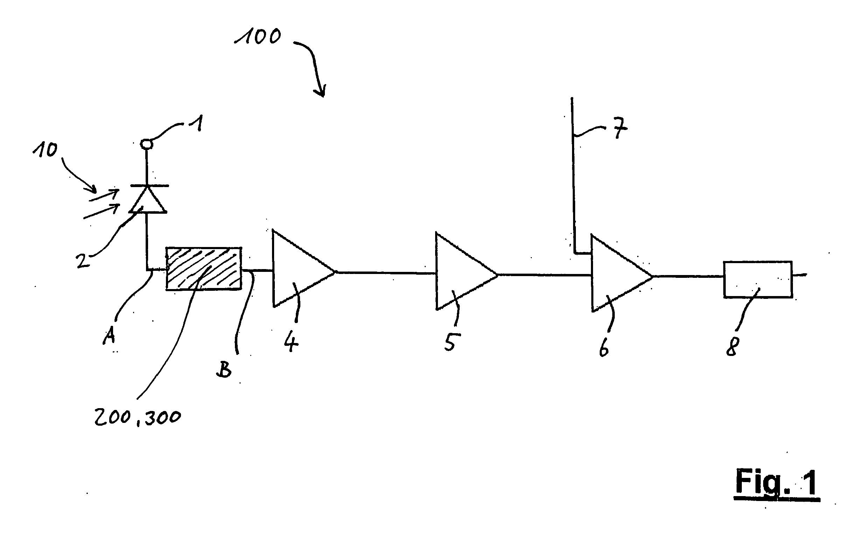

Der in Fig. 1 dargestellte Empfangssignalpfad 100 eines optischen Entfernungsmessers für das Pulse-Time-of-Flight-Verfahren umfasst eine Gleichspannungsquelle 1 zur Versorgung des Lichtempfängers, der in diesem Beispiel eine Lawinen-Photodiode 2 umfasst. Bei Einfall eines von einem (nicht dargestellten) Objekt in einem (nicht dargestellten) Überwachungsraum reflektierten bzw. remittierten Messlichtpulses 10 erzeugt die Lawinen-Photodiode 2 ein Stromsignal, das von der pin-Dioden-Schaltung 200, 300 aufgenommen und gedämpft wird, wie es weiter unten näher erläutert wird.

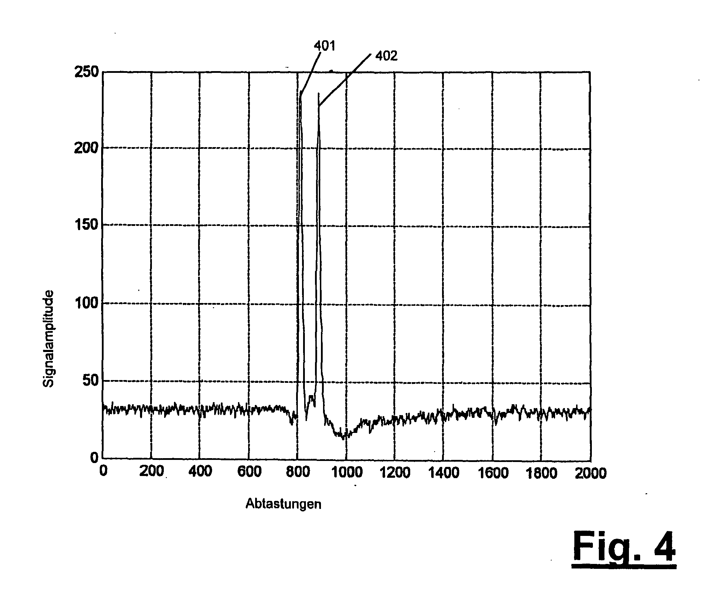

Das gedämpfte Stromsignal wird an eine erste Verarbeitungsstufe weitergeleitet, die im Beispiel durch einen Transimpedanzverstärker 4 gebildet ist. Von diesem wird das Signal als Spannungssignal an einen Summierer 6 weitergegeben. Zwischen dem Transimpedanzverstärker 4 und dem Summierer 6 kann ein Verstärker 5 mit einstellbarem Verstärkungsfaktor vorgesehen sein. Der Summierer 6 addiert einen Referenzpuls 7, der von dem in den Überwachungsraum ausgesendeten Messlichtpuls als Referenzstartpunkt abgeleitet ist. Das Ausgangssignal des Summierers 6 wird an einen Analog/ Digital-Wandler 8 gegeben, der die Pulssignale in digitale Werte umformt, so dass sie zum Beispiel von einem (nicht dargestellten) Rechner ausgewertet werden können. Das Eingangssignal des Analog/Digital-Wandlers ist in Fig. 4 gezeigt und besteht aus dem Peak 401, der dem Referenzpuls 7 entspricht, und dem Peak 402, der dem Empfangssignal entspricht.

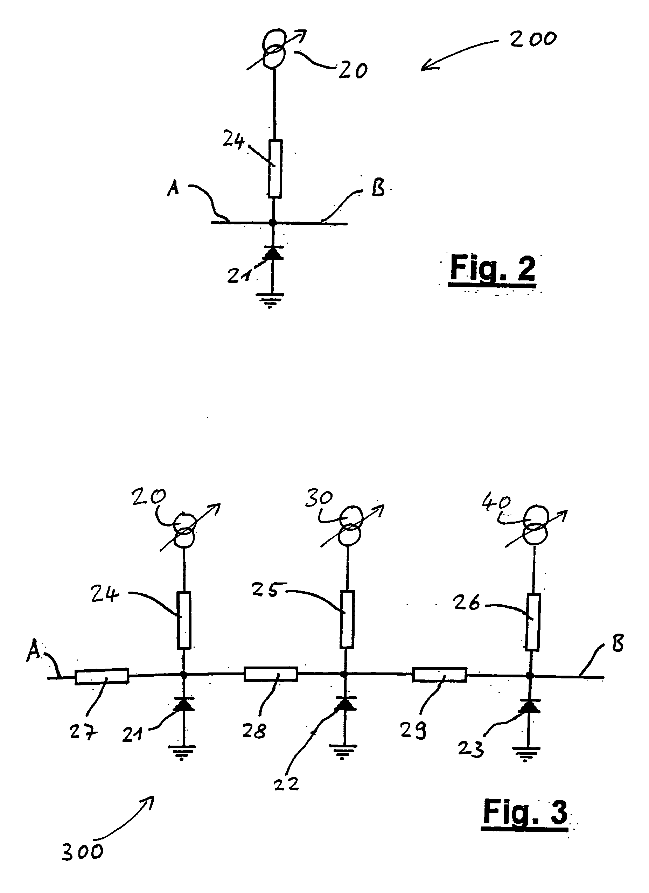

Fig. 2 zeigt eine erste Ausführungsform 200 der pin-Dioden-Schaltung. Die Verbindung A kommt vom Stromausgang des Lichtempfängers 2, während die Verbindung B zum Stromeingang des Transimpedanzverstärkers 4 führt. Die Schaltung umfasst hier eine pin-Diode 21, die einerseits mit Masse und andererseits mit dem Signalpfad verbunden ist. Eine einstellbare Gleichstromquelle ist über ein Impedanzkoppelglied 24 ebenfalls mit dem Signalpfad verbunden. Bei hohen Frequenzen wirkt die pin-Diode im Wesentlichen wie ein Widerstand mit veränderlichem Widerstandswert, wobei der Widerstandswert durch den von der Stromquelle 20 eingeprägten Gleichstrom vorgegeben wird.

Bei der in Fig. 3 gezeigten alternativen Ausführungsform 300 der pin-Diodenschaltung sind drei parallel geschaltete pin-Dioden 21, 22, 23 vorgesehen, die über entsprechende Impedanzkoppelglieder 24, 25, 26 mit einstellbaren Gleichstromquellen 20, 30, 40 verbunden sind. Auch hier kommt die Verbindung A vom Stromausgang des Lichtempfängers und die Verbindung B führt zum Transimpedanzverstärker 4. Das Wirkprinzip dieser Schaltung ähnelt dem der Ausführungsform der Fig. 2, wobei durch die Kaskadierung der Dynamikbereich erhöht wird. Selbstverständlich kann auch eine andere Anzahl von pin-Dioden vorgesehen sein, um einen den Anforderungen entsprechenden Dynamikbereich zu erhalten.

In einer nicht gezeigten Ausführungsform sind die mehreren pin-Dioden über entsprechende Impedanzkoppelglieder mit einer gemeinsamen Gleichstromquelle verbunden.

Die beschriebenen Ausführungsformen werden wie folgt eingesetzt.

In an sich bekannter Weise wird ein Lichtpuls in einen zu überwachenden Überwachungsraum gesendet. Die dazu verwendete und hier nicht gezeigte Lichtquelle ist ortsnah zu der in Figur 1 gezeigten Empfangsschaltung angeordnet und bildet insbesondere zusammen mit dieser in an sich bekannter Weise eine integrale Einheit.

Ein im Überwachungsraum befindliches Objekt reflektiert oder remittiert den Lichtpuls, der als Empfangslichtpuls 10 von der Lawinendiode 2 empfangen wird. Das von der Lawinendiode 2 erzeugte elektrische Strom-Ausgangssignal wird zur pin-Diodenschaltung 200, 300 weitergeleitet.

Das pulsförmige Strom-Ausgangssignal (im Folgenden auch als "elektrischer Strom-Empfangspuls" bezeichnet) wird durch die pin-Diode 21 (Figur 2) bzw. pin-Dioden 21, 22, 23 (Figur 3) teilweise gegen Masse abgeleitet. Der auf diese Weise energetisch verringerte elektrische Strom-Empfangspuls wird durch den Transimpedanzverstärker 4 in ein Spannungssignal gewandelt. Durch die Dämpfung des elektrischen Strom-Empfangspulses mit Hilfe der vorgeschalteten pin-Diodenschaltung 200, 300 ist gewährleistet, dass der Transimpedanzverstärker 4 nicht übersteuert wird.

Das Spannungs-Ausgangssignal des Transimpedanzverstärkers 4 wird über einen einstellbaren Verstärker 5 zu einem Summierer 6 geleitet. Hier wird am Eingang 7 ein von dem in den Überwachungsraum ausgesendeten Messlichtpuls abgeleiteter Referenzpuls eingespeist, der dem Spannungssignal hinzuaddiert wird.

Das entstehende Signal ist in Figur 4 gezeigt. Es sind Kurven dargestellt, die über den Analog/Digital-Wandler 8 abgetastet wurden. Der Peak 401 entspricht dem von dem in den Überwachungsraum ausgesendeten Messlichtpuls abgeleiteten Referenzpuls. Der Peak 402 entspricht dem von der Lawinendiode 2 empfangenen und gegenüber dem ausgesendeten Messlichtpuls zeitlich versetzten Empfangslichtpuls 10, der nach Umwandlung in ein elektrisches Signal mit einer erfindungsgemäß vorgesehenen pin-Dioden-Schaltung 200, 300 gedämpft wurde. Die beiden Peaks weisen nahezu identische Amplitudenhöhen und Kurvenformen auf und können daher sehr genau ausgewertet werden. Es wird deutlich, dass das empfangene Signal durch die pin-Diodenschaltung derart gedämpft wurde, dass es ohne nichtlineare Verzerrung/Begrenzung im Dynamikbereich der Signalauswertung liegt.

Das Signal wird mit Hilfe des Analog/Digital-Wandlers 8 in ein digitales Signal umgewandelt.

Aus dem Abstand der Pulse lässt sich die Lichtlaufzeit im Überwachungsbereich berechnen. Mit Hilfe der Lichtgeschwindigkeit lässt sich daraus schließlich der Abstand des Objektes von dem optischen Entfernungsmesser bestimmen (Abstand = Lichtgeschwindigkeit * Laufzeit / 2). Diese Berechnungen und Bestimmungen können z.B. mit einem geeigneten Prozessor automatisch durchgeführt werden.

Zur Abstimmung der Dämpfung der pin-Dioden-Schaltung werden bevorzugt ein oder mehrere Vorversuche durchgeführt. Dabei wird zunächst ohne Dämpfung die Größe der Übersteuerung bestimmt, aus der sich der für die gewünschte Dämpfungswirkung geeignete Widerstand der pin-Dioden bestimmen lässt. Daraus lässt sich der notwendige Gleichstrom durch die pin-Dioden ermitteln. Alternativ wird der jeweils einzustellende Stromwert während der Messung iterativ bestimmt.

Die erfindungsgemäße Anordnung mit einer pin-Dioden-Schaltung kann vorteilhaft bei Sensoren eingesetzt werden, die nach dem Pulse-Time-of-Flight-Verfahren oder nach dem Continuous-Wave-Time-of-Flight-Verfahren arbeiten. Ein Einsatz ist sowohl bei eindimensionalen als auch bei mehrdimensionalen Entfernungsmessern möglich.

Mit der erfindungsgemäßen Anordnung ist die besonders einfache und genaue Auswertung eines Signals mit Hilfe eines Analog/Digitalwandlers in Form eines Spannungssignals möglich, wobei vom Empfänger zunächst ein Stromsignal zur Verfügung gestellt wird. Trotzdem wird die sich anschließende leicht zur Übersteuerung neigende elektronische Signalauswertung (insbesondere z.B. ein Strom/ Spannungswandler bzw. Transimpedanzverstärker) dank der Dämpfung durch die zwischengeschaltete pin-Diodenschaltung nicht übersteuert.

### Bezugszeichenliste

- 1: Gleichspannungsquelle
- 2: Photodiode
- 4: Transimpedanzverstärker
- 5: einstellbarer Verstärker
- 6: Summierer
- 7: Referenzpulseingang
- 8: Analog/Digital-Wandler
- 10: reflektiertes Messlicht
- 20: einstellbare Gleichstromquelle
- 21, 22, 23: pin-Diode
- 24, 25, 26: Impedanz-Koppelglied
- 27, 28, 29: Widerstand
- 30, 40: einstellbare Gleichstromquelle
- 100: Empfangssignalpfad
- 200, 300: pin-Dioden-Schaltung
- 401: Referenzpuls
- 402: Empfangspuls

- A, B: Verbindungen

## Patentansprüche

1. Optischer Entfernungsmesser mit
einem Lichtsender zum Aussenden von Messlicht in einen Überwachungsraum,
einem Lichtempfänger (2) zum Empfang von durch ein Objekt im Überwachungsraum reflektiertem bzw. remittiertem Messlicht und zur Erzeugung eines elektrischen Ausgangssignals und
einer Auswerteschaltung, die mit dem Lichtempfänger verbunden ist, um aus dessen Ausgangssignal die Laufzeit des Messlichtes zu bestimmen und daraus die Entfernung des Objektes abzuleiten,
**gekennzeichnet durch**
eine zwischen dem Lichtempfänger (2) und der Auswerteschaltung angeordnete und mit diesen elektrisch verbundene pin-Dioden-Schaltung (200, 300) mit mindestens einer pin-Diode (21, 22, 23), wobei die pin-Dioden-Schaltung das Strom-Ausgangssignal des Lichtempfängers dämpft.

2. Optischer Entfernungsmesser nach Anspruch 1,
**dadurch gekennzeichnet, dass**
die Auswerteschaltung einen Analog/Digital-Wandler (8) umfasst.

3. Optischer Entfernungsmesser nach Anspruch 1 oder 2,
**dadurch gekennzeichnet, dass**
die Auswerteschaltung einen Transimpedanzverstärker (4) umfasst.

4. Optischer Entfernungsmesser nach zumindest einem der vorstehenden Ansprüche,
**dadurch gekennzeichnet, dass**
der Lichtsender zum Aussenden von pulsförmigem Messlicht und die Auswerteschaltung zur Bestimmung des Objektabstandes aus der Pulsverzögerung ausgestaltet sind.

5. Optischer Entfernungsmesser nach zumindest einem der Ansprüche 1 bis 3,
**dadurch gekennzeichnet, dass**
der Lichtsender zum Aussenden modulierten, kontinuierlichen Messlichtes und die Auswerteschaltung zur Bestimmung des Objektabstandes aus der Phasenverschiebung zwischen ausgesendetem und empfangenem Messlicht ausgestaltet sind.

6. Optischer Entfernungsmesser nach zumindest einem der vorstehenden Ansprüche,
**dadurch gekennzeichnet, dass**
die pin-Dioden-Schaltung (200, 300) mindestens eine pin-Diode (21, 22, 23) umfasst, die mit HF-Masse verbunden ist.

7. Optischer Entfernungsmesser nach zumindest einem der vorstehenden Ansprüche,
**dadurch gekennzeichnet, dass**
die mindestens eine pin-Diode (21, 22, 23) mit wenigstens einer Gleichstromquelle (20, 30, 40) verbunden ist, um einen Gleichstrom durch die mindestens eine pin-Diode (21, 22, 23) festzulegen.

8. Optischer Entfernungsmesser nach Anspruch 7,
**dadurch gekennzeichnet, dass**
die wenigstens eine Gleichstromquelle (20) regelbar ist.

9. Optischer Entfernungsmesser nach zumindest einem der vorstehenden Ansprüche,
**dadurch gekennzeichnet, dass**
die pin-Diodenschaltung (200, 300) mehrere parallel geschaltete pin-Dioden (21, 22, 23) umfasst.

10. Verfahren zur optischen Entfernungsmessung mit folgenden Schritten:
Aussenden von Messlicht in einen Überwachungsbereich;
Empfangen von gegebenenfalls von einem Objekt reflektiertem oder remittiertem Messlicht mit Hilfe eines Lichtempfängers und Umwandlung in ein elektrisches Signal;
Dämpfen des elektrischen Signales des Lichtempfängers mit einer pin-Diodenschaltung (200, 300) mit mindestens einer pin-Diode (21, 22, 23); und
Auswerten der Lichtlaufzeit des Messlichtes zur Bestimmung der Entfernung des Objektes.

11. Verfahren nach Anspruch 13,
**dadurch gekennzeichnet, dass**
die Einstellung der Dämpfungswirkung der pin-Diodenschaltung (200, 300) durch Einstellung eines Gleichstromes durch die pin-Diode (21) bzw. pin-Dioden (21, 22, 23) vorgenommen wird.

12. Verfahren nach Anspruch 14,
**dadurch gekennzeichnet, dass**
der jeweilige Gleichstrom durch Vorversuche derart ermittelt wird, dass das elektrische Signal derart gedämpft wird, dass eine Auswerteschaltung zur Auswertung des Lichtempfangssignales nicht übersteuert wird.
